# EUROPEAN PATENT SPECIFICATION

(11) **EP 1 492 399 B1**
(45) Date of publication and mention of the grant of the patent: **31.12.2008**
(21) Application number: 03717855.5
(22) Date of filing: 09.04.2003
(51) Int. Cl.: A01B 29/04

(54) **A ROLLER RING AND A RING ROLLER WITH SUCH A ROLLER RING**
WALZENRING UND RINGELWALZE MIT SOLCH EINEM WALZENRING
ANNEAU DE ROULEMENT ET ANNEAU DE ROULEMENT PRESENTANT UN TEL ANNEAU DE ROULEMENT

(30) Priority: 10.04.2002 SE 0201097
(43) Date of publication of application: 05.01.2005
(73) Proprietor: Väderstad-Verken AB, 590 21 Väderstad (SE)
(72) Inventor: KARLSSON, Bo, S-585 97 Linköping (SE); DAHL, Jörgen, SE-599 91 Ödeshög (SE)
(74) Representative: Stein, Jan Anders Lennart
(86) International application number: PCT/SE2003/000577
(87) International publication number: WO 2003/086043

(56) References cited:
- EP-A2- 0 222 451
- GB-A- 2 323 511
- US-A- 1 444 224
- US-A- 1 682 896
- US-A- 1 857 753
- US-A- 2 114 140

## Description

### BACKGROUND OF THE INVENTION

The present invention relates to a roller ring comprising a hollow body with an axial extension and a radial extension, the axial extension of the body being less than its radial extension, and a coaxially arranged suspending member having an axial extension and forming a coaxial opening for receiving an axle.

It also relates to a ring roller comprising an axle provided with a plurality of such roller rings.

Such a ring roller with such roller rings are known through DE-A-2 030 448 which however suffers the disadvantage of being too light, and can therefore not be used to crush soil clods.

Another low weight ring roller is known from EP-A-0 222 451.

US 1,682,896 discloses a ring roller with roller rings supported on a hollow drum which is filled with a liquid ballast.

### SUMMARY OF THE INVENTION

The object of the present invention is to improve the known ring roller with respect to its soil tillage properties.

This has been achieved by a roller ring as defined in claim 1.

Hereby a heavy ring roller is achieved, which can be used for most soil types.

The body preferably comprises two essentially rotationally symmetrical halves, which are non-detachably connected to each other, and are provided with the said ballast in the said body.

Alternatively the body comprises two essentially rotationally symmetrical halves, which are detachably connected to each other, to allow the addition or removal of the said ballast. The ballast can be disc shaped with a coaxial opening and placed in the space to fill up a part or the whole of the body's interior.

At least one of the halves is preferably provided with an internal holding member to receive the said ballast at a predetermined place between the halves. Such an internal holding member can consist of hooks connected by means of welding to the inside of the half/halves in order to receive an annular ballast Alternatively, the internal holding member is achieved by at least one of the said halves being formed with an annular coaxial depression for receiving an annular ballast.

Advantageously, at least one of the halves is provided with an external holding member for receiving the said ballast at a predetermined place on the exterior of the said one half. Of course these containing members can also consist of hooks or suchlike. Alternatively, the external holding member is achieved by at least one of the said halves being formed with an annular coaxial depression for receiving an annular ballast.

Pereferably, said ballast is connected to said suspending member. A defined positioning of the ballast in relation to the body is thus achieved. In particular, it is possible to keep the ballast away from the walls of the body, such that wear of the walls.

Advantageously, the radial periphery of the respective halves is provided with a radially orientated flange.

Advantageously, the ballast is annular. The axle is preferably provided with a prestressing device for achieving an axially orientated prestressing of the roller rings against each other, and a stiffening of the axle.

### DRAWING SUMMARY

In the following, the invention is described in more detail with reference to the attached drawings in which:
Figure 1 illustrates an agricultural machine provided with ring rollers with roller rings,
Figure 2 illustrates another agricultural machine provided with ring rollers with roller rings,
Figure 3 a is a front view of a roller ring according to a first embodiment,
Figure 3b is a side view of a second embodiment of the roller ring,
Figure 3c illustrates the roller ring shown in Figure 3b in perspective,
Figure 3d is a radial section through the roller ring shown in Figures 3b and 3c,
Figures 4a and 4b illustrate the roller ring shown in Figures 3b-3d provided with a hub sheath,
Figure 5 shows two roller rings provided with ballast,
Figure 6 illustrates in perspective ballast to be arranged between roller rings,
Figure 7 illustrates in perspective ballast to be arranged within roller rings,
Figure 8 illustrates assembly of the ballast between two roller rings,
Figures 9A and 9B illustrate roller rings provided with alternative internal ballasts; and
Figures 10A and B illustrate schematically an axle provided with roller rings.

### DETAILED DESCRIPTION

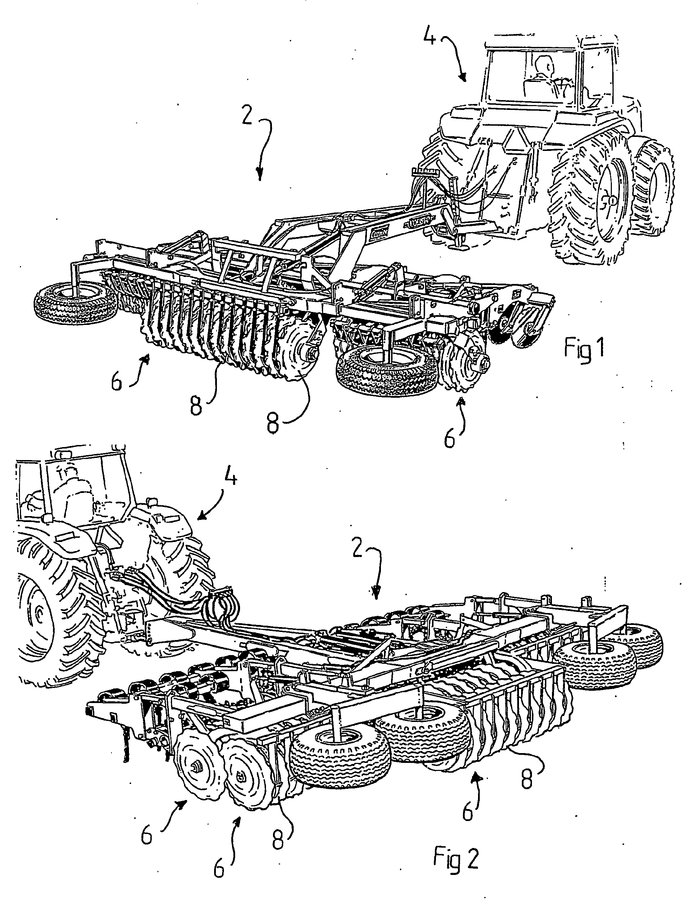

Figure 1a shows a first variant of an agricultural machine 2 drawn by a tractor 4. The agricultural machine 2 is provided with a plurality of ring rollers 6, each comprising a plurality of roller rings 8.

Figure 2 shows a second variant of a tractor-drawn agricultural machine 2, comprising a plurality of alternative ring rollers 6, the roller rings of which are partly located in each other's space.

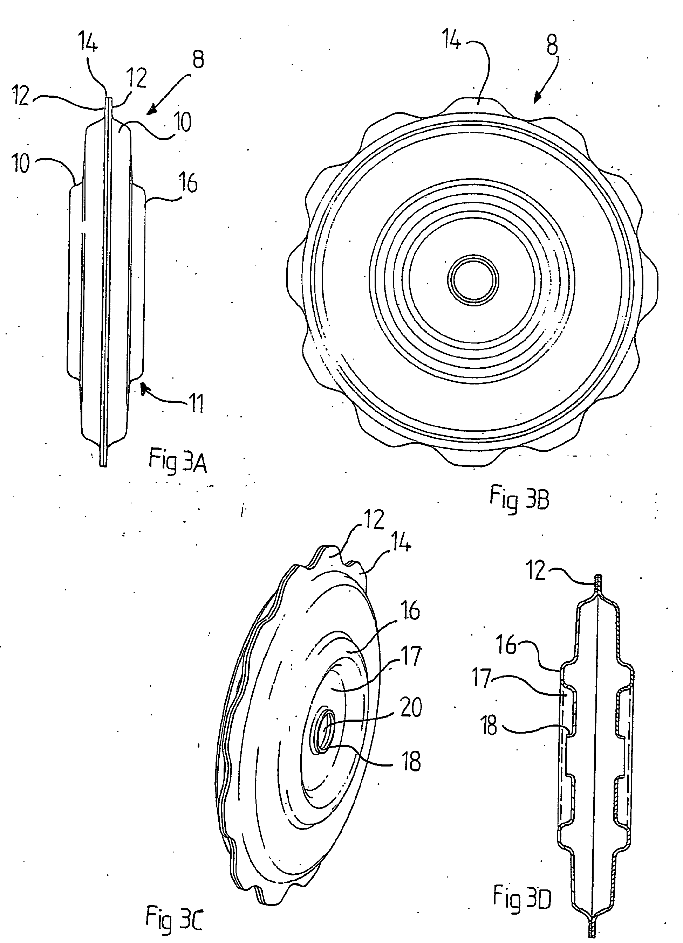

Figure 3 a shows a roller ring 8 comprising two opposing, rotationally symmetrical halves 10 of steel, plastic, cast iron, concrete or suchlike forming a body 11. The respective halves are provided with an annular flange 12 which together form a common annular flange 14 for the roller ring 8. The halves 10 are provided with an annular protrusion 16 intended to abut a corresponding protrusion on a neighbouring roller ring. The protrusion 16 forms on the exterior of each ring half a circular or an annular external depression 17. The halves 10 can be detachably arranged beside each other or joined together, for example by means of welding of the flange 12 and/or the protrusions 16.

Figures 3b-3d show an alternative embodiment of the roller ring 8 with a serrated flange 14. An annular flange 18 forms a circular opening 20. Accordingly, the depression 17 is in this case annular. The halves 10 are in this embodiment essentially mirror-inverted owing to the above described serrated flange 14.

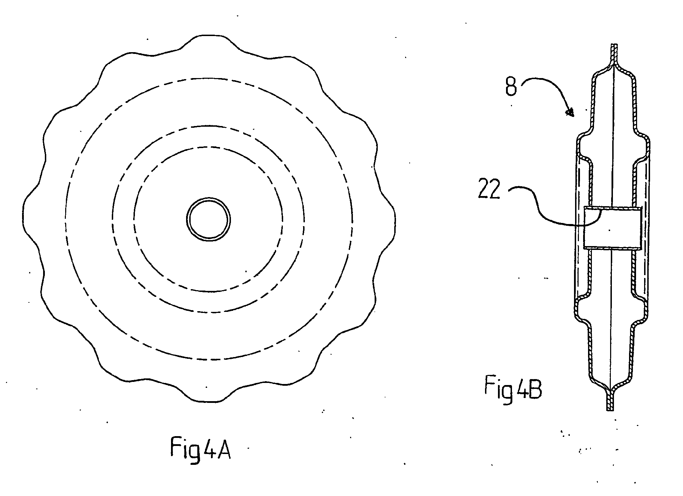

Figures 4a and 4b show the roller ring as in 3b-3d provided with a hub sheath 22 arranged in the said opening. The hub sheath is firmly arranged to at least one of the halves and therefore stiffens the roller ring 8.

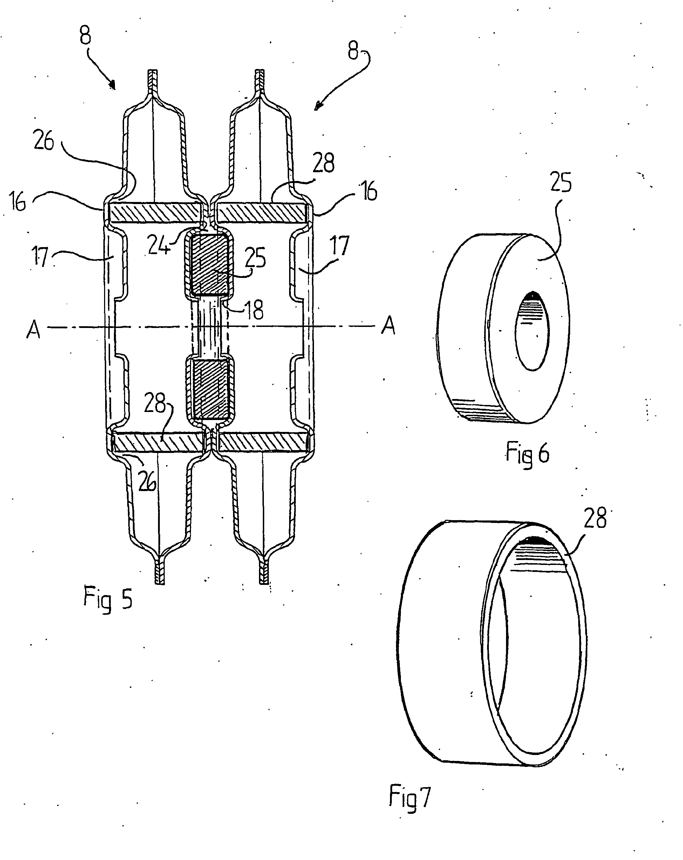

Figure 5 shows two roller rings 8 arranged adjacent to each other on an axle A-A. The adjacent halves and external depressions 17 of the roller rings 8 together form an annular space 24 bounded by their respective protrusions 16, the base of the depression and the flange 18. In the annular space 24 is arranged an external annular ballast 25.

The protrusion 16 forms in the interior of each half an internal annular depression 26, in which an annular ballast 28 is arranged.

Figure 6 shows the external ballast 25, which can be made of concrete, cast iron or other suitable material.

Figure 7 shows the internal ballast 28.

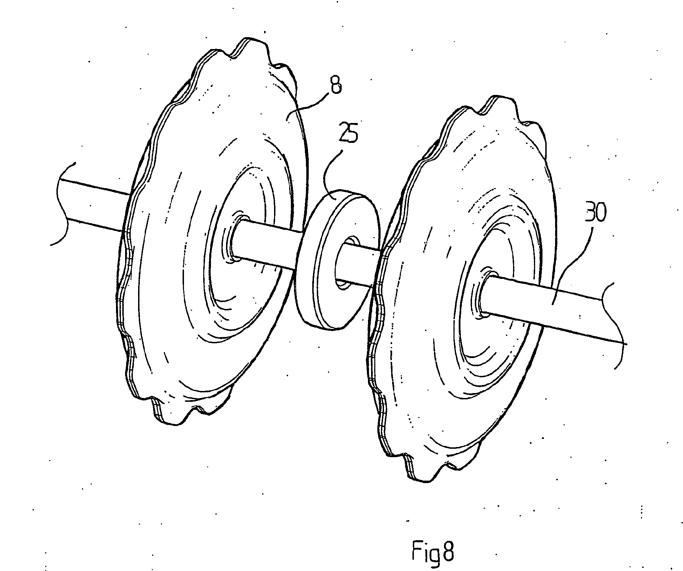

Figure 8 shows the arrangement of two roller rings 8 and an intermediate external. ballast 25 on an axle 30.

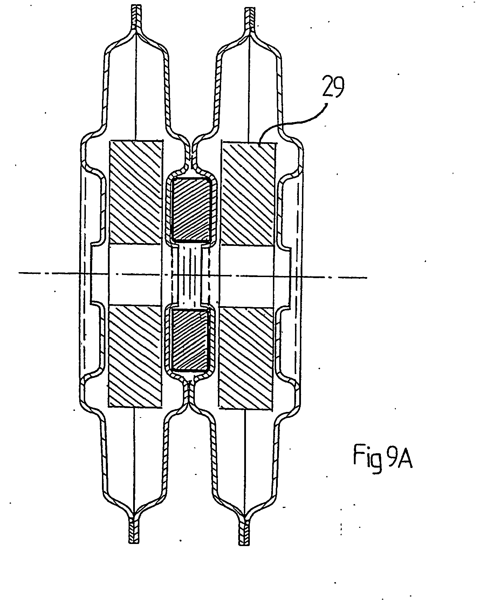

Figure 9A shows two roller rings arranged along an axle A-A with alternative internal disc shaped ballast 29 that does not utilise the depressions 26, which allows a greater axial flexibility in each roller ring.

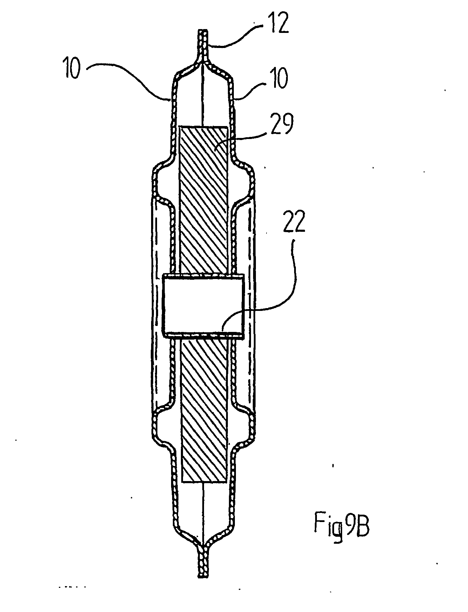

Figure 9B shows a roller ring provided with a disc shaped ballast 28 connected to the hub sheath 22. This is e.g. performed by moulding the ballast 29 directly to radially extending flanges (not shown). Hereby it is possible to keep the ballast 29 at a distance from the inner walls of the halves 10, such that the ballast does not cause wear on the inner walls. In order to maintain a certain axial flexibility, one of the halves 10 is connected to the hub sheath 22 e.g. by welding, whereas the other half 10 is loosely arranged at the hub sheath. The halves are preferebly, but not necessarily joined to one another by welding at the flange 12.

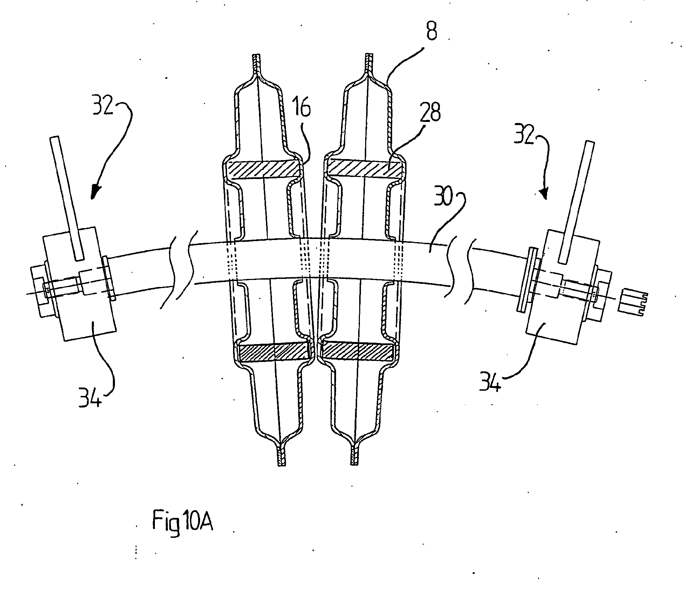

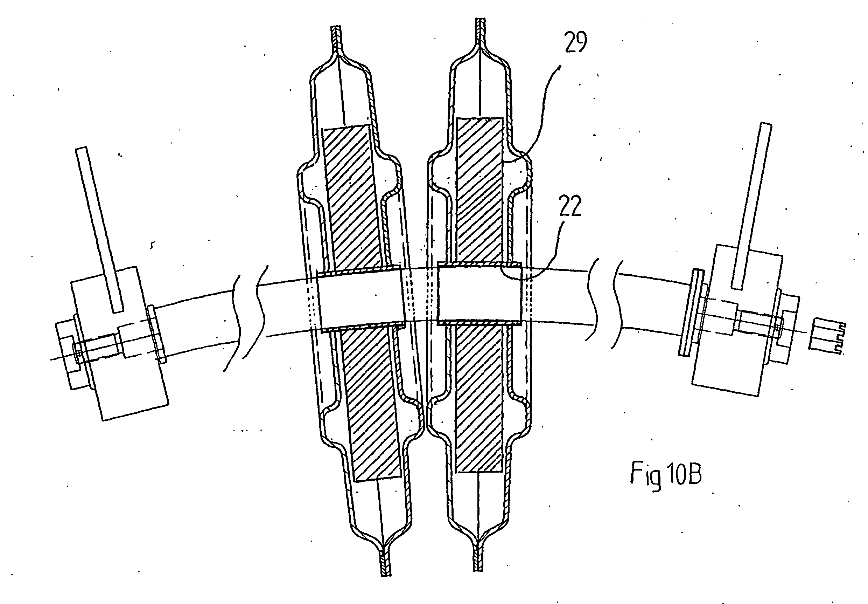

Figure 10A and 10B show two roller rings 8 arranged on the axle 30, respectively. Other roller rings on the axle and the external ballast 28 have been omitted for the sake of clarity. A prestressing device 32 comprising two nuts 34 arranged on each end of the axle 30 press the roller rings 8 against each other. The flexibility of the roller rings depends partly on whether or not a hub sheath 22 is fitted (cf. Figs. 4a-4b), and partly on whether or not internal ballast 28 is arranged in the depressions 26 (cf. Fig. 9). The required or actual flexibility is also dependent on the prestressing applied. When the nuts are tightened, the protrusions 16 begin to press against each other. Thanks to this, a great prestressing level can be achieved, which in an advantageous way stiffens the axle more than if no protrusions were so arranged.

Figures 10A and 10B also show how bending stress affects the internal relationship of the plates.

In the above, only a roller ring with identical, mirror-inverted arranged halves is shown. However, one half can be flat, i.e. without the protrusion 16. Both the external and the internal ballast 25, 28 can still be held in place thanks to the prestressing device 32. Alternatively, one half can be provided with one or more clamps for holding the external and internal ballast rings 25, 28 in place.

Alternatively, both roller rings can be provided with one or more clamps or an annular welded-on U-shaped flange on one or both sides of the halves to hold the external and/or internal ballast ring in place.

The embodiment shown in Figure 3a can of course be provided with internal and external ballast as described above.

Naturally, a ring roller can be built up of roller rings of different materials. Similarly, the roller rings can be built up of halves of different materials. The ballast too can be made from a combination of materials or groups of materials.

An additional advantage with the protrusions 16 is that they prevent soil pressing in between the roller rings, which can otherwise cause the roller rings to cease to rotate during tillage of the soil, so that the roller rings pile soil up in front of them.

## Claims

1. A roller ring comprising a hollow body (11) with an axial extension (A-A) and a radial extension, the axial extension of the body (11) being less than its axial radial extension, and a coaxially arranged suspending member (18, 22) having an axial extension and forming a coaxial opening (20) for receiving an axle (30), **characterised in that** the body (11) is provided with at least one holding member (16, 17, 18, 22) for supporting a weight-increasing annular ballast (25,28) of solid material and amended that an annular ballast is comprised within the hollow body (11) held by said at least one holding member.

2. A roller ring according to Claim 1, wherein the body comprises two essentially rotationally symmetrical halves (10), which are non-detachably connected to one another, and are provided with said ballast (28) within said hollow body.

3. A roller ring according to Claim 1, wherein the body comprises two essentially rotationally symmetrical halves (10), which are detachably connected to one another, to allow the addition or removal of said ballast (28).

4. A roller ring according to any one of Claims 2 or 3, wherein at least one of the said halves (10) is provided with an internal holding member (26) to support the said ballast (28) at a predetermined place between the halves.

5. A roller ring according to Claim 4, wherein the internal holding member is an annular coaxial depression (26) in at least one of the said halves (10).

6. A roller ring according to any one of Claims 2-5, wherein at least one of the said halves (10) is provided with an external holding member (17) to support a ballast (25) at a predetermined place on the exterior of the said one half.

7. A roller ring according to Claim 6, wherein the external holding member (17) is an annular coaxial depression (17) in one of the said halves (10).

8. A rollers ring according to any one of claims 1 to 7, wherein the holding member comprises said suspending member (18, 22).

9. A roller ring according to any one of Claims 2-8 wherein the radial periphery of the halves (10) is provided with a radially orientated flange.

10. A roller ring according to any one of the preceding claims, wherein the holding member (16, 17, 18, 22) is formed to support an annular ballast (25,28).

11. A ring roller comprising an axle provided with a plurality of roller rings according to any one of Claims 1-10.

12. A ring roller according to Claim 11, wherein the ballast is annular.

13. A ring roller according to Claim 11 or Claim 12, wherein the axle is provided with a prestressing device (32) for achieving an axially orientated prestressing of the roller rings against each other, and a stiffening of the axle (30).

## Patentansprüche

1. Walzenring, umfassend einen hohlen Körper (11) mit einer axialen Ausdehnung (A-A) und einer radialen Ausdehnung, wobei die axiale Ausdehnung des Körpers (11) kleiner ist als seine radiale Ausdehnung, und ein koaxial angeordnetes Aufhängungselement (18, 22), das eine axiale Ausdehnung aufweist und eine koaxiale Öffnung (20) zum Aufnehmen einer Welle (30) bildet, **dadurch gekennzeichnet, dass** der Körper (11) mit zumindest einem Halteelement (16, 17, 18, 22) zum Abstützen eines Gewicht erhöhenden ringförmigen Ballasts (25, 28) aus einem festen Material versehen ist und dass ein ringförmiger Ballast innerhalb des hohlen Körpers (11) umfasst ist, der durch das zumindest eine Halteelement gehalten ist.

2. Walzenring nach Anspruch 1, wobei der Körper zwei im Wesentlichen drehsymmetrische Hälften (10) aufweist, die nicht abnehmbar miteinander verbunden sind und mit dem Ballast (28) innerhalb des hohlen Körpers versehen sind.

3. Walzenring nach Anspruch 1, wobei der Körper zwei im Wesentlichen drehsymmetrische Hälften (10) aufweist, die abnehmbar miteinander verbunden sind, um das Hinzufügen oder Entfernen des Ballasts (28) zu ermöglichen.

4. Walzenring nach einem der Ansprüche 2 oder 3, wobei zumindest eine der Hälften (10) mit einem inneren Halteelement (26) versehen ist, um den Ballast (28) an einem vorbestimmten Ort zwischen den Hälften abzustützen.

5. Walzenring nach Anspruch 4, wobei das innere Halteelement eine ringförmige koaxiale Vertiefung (26) in zumindest einer der Hälften (10) ist.

6. Walzenring nach einem der Ansprüche 2 bis 5, wobei zumindest eine der Hälften (10) mit einem äußeren Halteelement (17) versehen ist, um einen Ballast (25) an einem vorbestimmten Ort an der Außenseite der einen Hälfte abzustützen.

7. Walzenring nach Anspruch 6, wobei das äußere Halteelement (17) eine ringförmige koaxiale Vertiefung (17) in einer der Hälften (10) ist.

8. Walzenring nach einem der Ansprüche 1 bis 7, wobei das Halteelement das Stützelement (18, 22) umfasst.

9. Walzenring nach einem der Ansprüche 2 bis 8, wobei der radiale Umfang der Hälften (10) mit einem radial ausgerichteten Kragen versehen ist.

10. Walzenring nach einem der vorstehenden Ansprüche, wobei das Halteelement (16, 17, 18, 22) gebildet ist, um einen ringförmigen Ballast (25, 28) abzustützen.

11. Walzenring, umfassend eine Welle, die mit einer Mehrzahl von Walzenringen nach einem der Ansprüche 1-10 versehen ist.

12. Walzenring nach Anspruch 11, wobei der Ballast ringförmig ist.

13. Walzenring nach Anspruch 11 oder 12, wobei die Welle mit einer Vorspannungsvorrichtung (32) zum Erlangen einer axial gerichteten Vorspannung der Walzenringe gegeneinander und einer Versteifung der Welle (30) versehen ist.

## Revendications

1. Anneau de rouleau comprenant un corps creux (11) possédant une extension axiale (A-A) et une extension radiale, l'extension axiale du corps (11) étant inférieure à son extension radiale, et un élément de suspension (18, 22) disposé coaxialement possédant une extension axiale et définissant une ouverture coaxiale (20) pour recevoir un essieu (30), **caractérisé en ce que** le corps (11) comporte au moins un élément de support (16, 17, 18, 22) pour supporter un ballast annulaire d'augmentation de poids (25, 28) fait d'un matériau plein, et **en ce qu'**un ballast annulaire est compris dans le corps creux (11) supporté par ledit au moins un élément de support.

2. Anneau de rouleau selon la revendication 4, dans lequel le corps comprend deux moitiés (10) essentiellement symétriques en rotation, qui sont connectées de manière non détachable l'une à l'autre, et qui comportent ledit ballast (28) dans ledit corps creux.

3. Anneau de rouleau selon la revendication 1, dans lequel le corps comprend deux moitiés (10) essentiellement symétriques en rotation, qui sont connectées de manière détachable l'une à l'autre afin de permettre l'ajout ou le retrait dudit ballast (28).

4. Anneau de rouleau selon l'une quelconque des revendications 2 ou 3, dans lequel au moins une desdites moitiés (10) comprend un élément de support interne (26) pour supporter ledit ballast (28) en un endroit prédéterminé entre les moitiés.

5. Anneau de rouleau selon la revendication 1, dans lequel l'élément de support interne consiste en une dépression coaxiale annulaire (26) dans l'une au moins desdites moitiés (10).

6. Anneau de rouleau selon l'une quelconque des revendications 2 à 5, dans lequel une au moins desdites moitiés (10) comporte un élément de support externe (17) pour supporter un ballast (25) en un endroit prédéterminé à l'extérieur de ladite au moins une moitié.

7. Anneau de rouleau selon la revendication 6, dans lequel l'élément de support externe (17) consiste en une dépression coaxiale annulaire (17) dans l'une desdites moitiés (10).

8. Anneau de rouleau selon l'une quelconque des revendications 1 à 7, dans lequel l'élément de support comprend ledit élément de suspension (18, 22).

9. Anneau de rouleau selon l'une quelconque des revendications 2 à 8, dans lequel la périphérie radiale des moitiés (10) comprend un flanc orienté radialement.

10. Anneau de rouleau selon l'une quelconque des revendications précédentes, dans lequel l'élément de support (16, 17, 18, 22) est formé de manière à supporter un ballast annulaire (25, 28).

11. Rouleau à anneaux comprenant un essieu comportant plusieurs anneaux de rouleau selon l'une quelconque des revendications 1 à 10.

12. Rouleau à anneaux selon la revendication 11, dans lequel le ballast est annulaire.

13. Rouleau à anneaux selon la revendication 11 ou la revendication 12, dans lequel l'essieu comporte un dispositif de précontrainte (32) permettant d'obtenir une précontrainte orientée axialement des anneaux de rouleau les uns contre les autres, ainsi qu'un raidissement de l'essieu (30).
